# EUROPEAN PATENT APPLICATION

(11) **EP 4 160 452 A1**
(43) Date of publication of application: **05.04.2023**
(21) Application number: 21200206.7
(22) Date of filing: 30.09.2021
(51) Int. Cl.: G06F 21/55, G06F 21/76, H04L 67/12

(54) **COMPUTER-IMPLEMENTED METHOD AND SURVEILLANCE ARRANGEMENT FOR IDENTIFYING MANIPULATIONS OF CYBER-PHYSICAL-SYSTEMS AS WELL AS COMPUTER-IMPLEMENTED-TOOL AND CYBER-PHYSICAL-SYSTEM**

(71) Applicant: Siemens Aktiengesellschaft, 80333 München (DE)
(72) Inventor: Botero Halblaub, Andrés, 85614 Kirchseeon (DE); Obradovic, Dragan, 85521 Ottobrunn (DE); Patzlaff, Heiko, 80799 München (DE); Schenk, Tim, 84034 Landshut (DE)
(74) Representative: Siemens Patent Attorneys

(57) **Abstract**

In order to identify manipulations of cyber-physical-systems, in which the manipulations of the cyber-physical-systems, such as cyber-security attacks or manual attacks, can be identified in real-time in order to avoid or even prevent damages to the cyber-physical systems, it is proposed with regard to (i) a cyber-physical-system (CPS, CPS') with an embedded, distributed and complex system structure (SST) and providing sensor/actor-signal-information (SASI) depicting a behavior of the cyber-physical-system (CPS, CPS') during operation or commissioning, and (ii) a Digital-Twin-Unit (DTU), creates and executes a digital twin (DT) replicating the behavior of the cyber-physical-system (CPS, CPS') and consequently producing replicated sensor/actor-signal-information (SASIᵣₚ) by simulating the cyber-physical-system (CPS, CPS'), and when the cyber-physical-system (CPS, CPS') and the Digital-Twin-Unit (DTU) are run in parallel,
(1) to detect cyclically a deviation in the behavior of the cyber-physical-system (CPS, CPS'),
(2) to determine on the basis an environmental model (EVM) impacts on the deviation due to external and environmental conditions and based on external information (EXI),
(3) to identify a manipulation of the cyber-physical-system (CPS, CPS') if
- for each detection cycle the sensor/actor-signal-information (SASI) and the replicated sensor/actor-signal-information (SASIᵣₚ) are different and consequently the deviation is detected,
- the detected deviation is not affected by impacts due to the model-based (EVM, EXI, EVIPU) determining and
- the detected deviation exceeds a threshold or tolerance value (TV).,

## Description

The invention refers to a method for identifying manipulations of cyber-physical-systems according to the preamble claim 1 and a surveillance arrangement for identifying manipulations of cyber-physical-systems according to the preamble claim 7.

Various cyber incidents over the past years have demonstrated the vulnerabilities of "cyber-physical-systems <CPS>" to outside manipulations. Notable examples of such attacks include the Stuxnet incident, Havex, Black Energy, Industroyer and Triton, (*cf. [1]*).

Modern trends such as Digitalization, Industry 4.0, Smart Grids and "Internet of Things <IoT>" have a potentially negative impact on the security of operational technology infrastructures by replacing "dumb" components through "smart" components, by increasing an interconnectedness of previously isolated subsystems and by replacing specialized hard and software by standard "commercial off-the-shelf <COTS>"-components. The question of the detection of cyber incursions has consequently received heightened attention, *(cf. also the special issue in the IEEE Control Systems Magazine in [**2**] and the tutorial in [**3**]).*

Various approaches have been proposed to detect attacks against cyber-physical systems (*cf. [**4**]*). While most commercial "intrusion detection system <IDS>" products mainly rely on the detection of anomalies in the information flow on the control network (*cf. [**5, 6**]),* past research has also concentrated on the modeling of the physical process (*cf*. *[**7-10**]*) in order to detect manipulations that result in deviations of the process state from the expected behavior. These works are using either prediction models such as "Auto-Regressive <AR>"-models, "Linear Dynamical State-Space <LDS>"-models and non-linear models or threshold values.

Other approaches have focused on the modeling of the behavior of the control logic by using replicas such as "digital twins" of components of a "Supervisory Control and Data Acquisition <SCADA>"-System in order to detect attacks on the control logic (*cf. [**11, 12**]*). While attacks against sensors have been discussed mainly in the context of energy distribution systems (*cf. [**13**]),* with the advent of digital "smart" sensors and actuators possible attacks against these components become important also for industrial control systems. A sole focus on the detection of control-logic manipulations is therefore no longer sufficient.

Cyber-security deals with the prevention and identification of attacks on information systems such as computers, computer networks and data centers. However, as industrial plants, cyber-physical-systems have also been designed and implemented more and more networked in the last 15 years. They are increasingly exposed to such cyber-attacks too. These attacks can cause major physical damage, e.g. in the worst case plant explosion, and must therefore be prevented and/or detected at an early stage.

Furthermore external influences are ignored when detecting cyber-attacks.

Since cyber-security has historically been concerned with the prevention and detection of attacks on pure information systems, the mechanisms and practices common there have been transferred to industrial facilities and adapted. This includes, crucially, preventing someone from gaining unauthorized access to in-plant or in-cyber-physical-system communication networks, as well as detecting an intruder by methods that are applied directly to the communication networks such as hacked logins, installation of malware, unusual data/program activities, changes in data and data streams, etc.

It is an objective of the invention to propose a computer-implemented method, computer-implemented-tool, surveillance arrangement for identifying manipulations of cyber-physical-systems and cyber-physical-system, in which the manipulations of the cyber-physical-systems, such as cyber-security-attacks or manual attacks, can be identified in real-time without ignoring external influences in order to avoid or even prevent damages to the cyber-physical-systems.

This objective is solved with regard to a method defined in the preamble of claim 1 by the features in the characterizing part of claim 1.

The objective is further solved with regard to a computer-implemented-tool by claim 6.

Moreover the objective is solved with regard to a surveillance arrangement defined in the preamble of claim 7 by the features in the characterizing part of claim 7.

Furthermore the objective is solved with regard to a cyber-physical system by claim 13.

The main idea of the invention according to the claims 1, 6, 7 and 13 in order to identify manipulations of cyber-physical-systems with regard to
(1) a cyber-physical-system with an embedded, distributed and complex system structure, which is preferably a production or industrial plant (*cf. claims 5 and 12*), including
   - system processes and system components communicating in a technical context via a network by using communication technology and communication protocols,
   - in the course of "Programmable Logic Controller <PLC>"-control and/or -regulation of the cyber-physical-system at least one Programmable Logic Controller, which is connected via sensors and/or actors with controllable system processes and controllable system components, wherein the sensors and/or the actors generate corresponding sensor/actor-signal-information utilized by the Programmable Logic Controller for the PLC-control and/or PLC-regulation,
   provides the sensor/actor-signal-information depicting a behavior of the cyber-physical-system during operation or commissioning,
(**2**) a Digital-Twin-Unit, which in the course of "Model-based Digital-Twin-Representation" of the cyber-physical-system is assignable via at least one of a "Human-Machine-Interface"-Unit and a "Supervisory Control and Data Acquisition <SCADA>"-Unit to the Programmable Logic Controller, is operable such that based on a simulation model of the cyber-physical-system and on an emulated Programmable Logic Controller a digital twin is created and executed, which replicates the behavior of the cyber-physical-system and consequently produces replicated sensor/actor-signal-information by simulating the cyber-physical-system, and
(3) when the cyber-physical-system and the Digital-Twin-Unit are run in parallel, is based on
   (**3a**) detecting cyclically a deviation in the behavior of the cyber-physical-system by comparing information by information the sensor/actor-signal-information with the replicated sensor/actor-signal-information,
   (**3b**) an environmental model-based determining impacts on the deviation due to external and environmental conditions of the cyber-physical-system and correspondingly based on external information, in particular date and time information, location information, environmental conditions such as temperature detected by an external sensor, etc., inputted into the environmental model and provided by an environmental-input-unit,
   (**3c**) identifying a manipulation of the cyber-physical-system if
      - for each detection cycle the sensor/actor-signal-information and the replicated sensor/actor-signal-information are different and consequently the deviation is detected,
      - the detected deviation is not affected by impacts due to the model-based determining and
      - the detected deviation exceeds a threshold or tolerance value, which is preferably a default value (*cf. claims 4 and* 10) .

The key aspect of the proposed solution is the integration of external information or factors into the detection process. External influences are not ignored when using digital simulations for the detection of cyber-attacks. This provides the advantage that the detection logic can be improved, and false alarms be avoided.

An example for this is "the time":
Let the time be required for the heating of a liquid in a tank. This time is dependent on the environmental temperature. The digital twin, only simulating the internal process dynamics, does not capture this environmental dependence. This leads to deviations between the operation of the physical process and the digital simulation. So, when it is hot outside, the heating takes less time to reach the target temperature of the liquid and the heating step finishes earlier in the physical process than in the simulation. When it is cold outside the heating takes longer and the inverse effect occurs.

In this context the basic idea of the proposed solution is a real-time, system-level simulation creating and executing a digital twin of the cyber-physical-system with the use of replicas of Programmable Logic Controllers <PLCs> and their control logic in order to be able to detect both cyber-attacks against the cyber-physical-system with the PLCs, the SCADA-unit and the HMI-unit as well as manipulations of sensors and actuators.

Importantly, the invention applies an approach for the identification of cyber-based manipulation of cyber-physical-systems, e.g. production or industrial plants, which utilizes completely different technologies compared to the conventional, well-known approaches, as the aforementioned digital twin of the cyber-physical-system is the underlying core of the cyber-attack or manual attack detection.

The advantage of the presented idea is that, in contrast to the conventional, well-known approaches, it checks whether values of the cyber-physical-system, i.e. signal values from the Programmable Logic Controller, process values from the field, transmitted communication values, are correct. So it is a direct way to detect a manipulation of the values. The conventional, well-known approaches "only" detect a violation of security measures in the network of the cyber-physical-system respectively the production or industrial plant.

However, in order to do this, the entire network must be monitored, which requires additional monitoring software to be installed throughout the cyber-physical-system. Even if this is the case, only cyber-attacks can be detected. Manual manipulation directly on the devices or the process is not possible.

The advantages of the proposed approach can be summarized as follows:
- Any manipulations (cyber-attacks or manual attacks) can be detected, wherein external factors or information such as environmental conditions are considered.
- It can be detected how much the manipulation influences the process in order to take appropriate countermeasures.
- The existing signal values can be easily reused/reused. It is "only" to perform the creation of a simulation model and the installation of a central digital twin including the identification process.
- In many cases, such a simulation model is already created for the virtual commissioning of the cyber-physical-system and can be reused almost seamlessly.

When using process simulations or the digital twins for the detection of anomalies in the operation of a process that could be a result of a cyber-attack, external factors or information such as environmental conditions that are not captured by the simulation could affect the process and lead to deviations between the simulation and the actual process. It is therefore important to integrate information about such external conditions into the evaluation of the deviations between the process and its digital twin.

Further advantages arise out of additional developments of the invention according to the independent claims 2 and 8 on one side and according to the claims 3 and 9 on the other.

So according to the claims 2 and 8 it is possible in the context of identifying system manipulation to determine or localize a source of the manipulation identified by the deviation detection by applying a root-cause-analysis. By doing so dependencies between the sensor/actor-signal-information are analyzed, wherein it is considered that
- the dependencies between the sensor/actor-signal-information are changed over time according to an operation point the cyber-physical-system is currently in,
- the dependencies between the sensor/actor-signal-information are derived inside the network, the system processes and the system components by partial derivatives of the simulation model,
- the dependencies between the sensor/actor-signal-information inside the Programmable Logic Controller are derived either by analyzing codes of the Programmable Logic Controller utilizing the sensor/actor-signal-information, so called PLC-codes, or by analyzing formalized flow-diagrams of the cyber-physical system.

While the PLC-codes are preferably analyzed manually or tool-supported, the formalized flow-charts are made available preferably via the "Human-Machine-Interface"-Unit or the SCADA-Unit, which are connected with the Programmable Logic Controller.

Moreover according to the claims 3 and 9 it is possible in the context of identifying system manipulation to examine manipulation-effects on the cyber-physical-system by checking
- whether countermeasures, which are preferably resilience-measures, are appropriate to protect the cyber-physical-system with regard to the manipulation either identified by the deviation detection or identified by the deviation detection and determined or localized by the root-cause-analysis and
- which one of the countermeasures,
   come into question, are possible or could be taken by assigning the said manipulation to the digital twin, where according to
- a "Fast-Forward"-simulation mechanism it is simulated what happens to the cyber-physical-system as result of the assigned manipulation and
- an optimization algorithm applied to the "Fast-Forward"-simulation mechanism or a "What-If"-algorithm applied multiple times to the "Fast-Forward"-simulation mechanism it is evaluated by which countermeasure the manipulated cyber-physical-system is retransferred into a safe state.

In summary, the proposed approach encompasses (i) the use of a digital twin including a simulation of the dynamic behavior of the entire cyber-physical-system, i.e. all system processes and system components, and thereby considering external factors or information such as environmental conditions as well as the Programmable Logic Controller <PLC>, (**ii**) the use of a real time simulation of the cyber-physical-system respectively the running in parallel (e.g. online) to the real cyber-physical-system and hence enabling fast cyber-attack or manual attack detection, by preferably and additionally (**iii**) using a root cause analysis when attacks have been detected to determine or localize the source of manipulation and (**iv**) examining manipulation-effects on the cyber-physical-system by checking - whether countermeasures are appropriate to protect the cyber-physical-system, and which one thereof come into question, are possible or could be taken by assigning the said manipulation to the digital twin.

The approach is completely different to well-known ones. So it links well-known technical aspects to an anomaly detection of cyber-physical-system-installations, typical control and control structure of cyber-physical-systems, e.g. production or industrial plants, as well as the knowledge of "cyber-security-attack"-locations, -types and their impact on the cyber-physical-system. The following steps and sub-steps are carried out:
1. Creation of a digital twin of the cyber-physical-system
   a. Creation of a real-time simulation model that maps the system behavior. System behavior here refers to the distance between any actuator signals that "leave" automation and sensor signals that "enter" into automation. This includes at maximum
      - a physical network that connects automation devices and actuators and sensors;
      - the functionality of the actuators and sensors themselves, especially when they are "smart" actuators and sensors, and
      - a system or process line between the actuators and sensors.
   b. Creation of an exact, emulated control of the automation of the system. For this purpose, the real automation project of the cyber-physical-system is loaded into a pure software controller, which can run without specific hardware on any computer (with the corresponding software).
2. Calibration of the simulation model for any stationary operating point as well as any dynamic behavior by known approaches. This ensures that the digital twin accurately reflects the expected behavior of the cyber-physical-system.
3. Determination of the permitted tolerance values of a comparison. Detection (cf. point 5) compares values of the real cyber-physical-system with those of the digital twin. A numerical 100% equal coverage will not be achieved even in correct operation, so that a numerical tolerance must be specified within which a value is considered to be not-yet-compromised.
4. Installation and execution of the digital twin parallel to the operation of the system and linking to input operations. The digital twin runs in real time to the real system and receives higher-level input operations (e.g. through a user interface <HMI-Unit> where the system operator makes specifications/settings, or through a higher-level control level <SCADA-Unit>). Thus, the digital twin always depicts the expected plant behavior without being connected to the real communication circuit of automation, the actuators/sensors and the system or process line, as if it were "offline".
   The problem however is: At certain intervals, an "initialization" of states of the simulation model (e.g. tank levels or temperatures) to certain sensor values of the real cyber-physical-system is necessary. This however has to be minimized due to attack possibilities.
5. Detection of a deviation by comparing the actuator and sensor signals of the real cyber-physical-system with the digital twin and determining on the basis of the environmental model impacts on the deviation due to the external and environmental conditions of the cyber-physical-system and correspondingly based on the external information inputted into the environmental model and provided by the environmental-input-unit.
   The actuator and sensor signals are the observable values of the real system and are therefore compared with the values simulated by the digital twin. In the case of a deviation greater than the tolerance specified in point 3. an anomaly is detected.
6. Localization of the manipulation. Since many sensors and actuators interact in a networked manner within the cyber-physical-system, in the event of a manipulation of a value, a change in many observable values occurs within a very short time. To find out the source of the manipulation, it is necessary to localize or determine the manipulation. This is based on the dependency analysis of the asset values among each other - a so-called root-cause analysis. Thereby three aspects are taken into account:
   a. Dependency analysis depends on the current operating point and must therefore be evaluated at run time. Depending on the operating point (example: closed valve), the dependencies of the values change among themselves and thus also the result of the root-cause analysis.
   b. The dependencies outside the automation/control (i.e. sensor signals of control signals) can be determined by partial derivatives of the present model of communication, actuator, sensor technology and the system or process line.
   c. The dependencies within the automation/control (i.e. actuator signals of sensor signals) can only be derived from automation engineering by code analysis (manual or tool-assisted) or analysis of available, formalized flow-diagrams.
7. Analysis of the deviation including the model-based determining of impacts affecting the deviation and the source and the adoption of countermeasures, e.g. resilience measures. Using the digital twin, the timely effects of manipulation can be calculated. For this purpose, the digital twin is simply provided with the detected manipulation at the localized location, starting from the current system state, and it is then evaluated in a "fast-forward" mechanism in which the simulation runs a multiple faster than real time, what will happen in the plant. By optimizing or a multiple "what-if" through-play of this simulation under certain set countermeasures, it is evaluated which can drive the cyber-physical-system back to a safe state without major damage and/or standstill.

Moreover, advantageous further developments of the invention arise out of the following description of a preferred embodiment of the invention according to FIGURES 1 to 3. They show:
FIGURE 1 a cyber-physical-system with a surveillance arrangement for identifying manipulations within the cyber-physical-system,
FIGURE 2 a principle diagram of a computer-implemented-tool, in particular a Computer-Program-Product, e.g. designed as an APP,
FIGURE 3 a flowchart of a "manipulation identification process" for identifying "cyber-physical-system <CPS>"-manipulations.

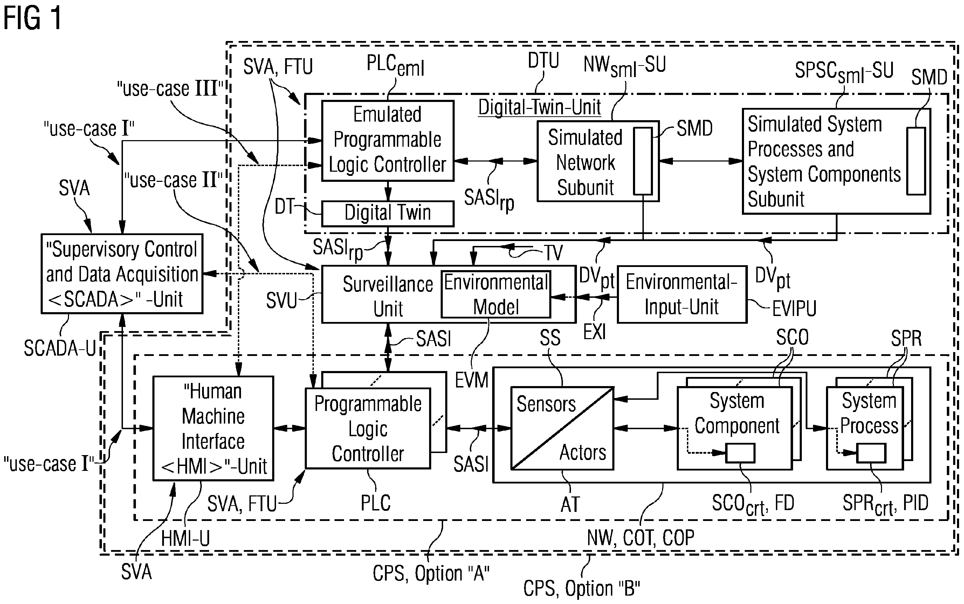

FIGURE 1 shows a cyber-physical-system CPS, CPS' and a surveillance arrangement SVA (depicted scenario) for identifying manipulations within the cyber-physical-system CPS, CPS'. The cyber-physical-system CPS, CPS', which is preferably a production or industrial plant, has an embedded, distributed and complex system structure SST made out of system processes SPR and system components SCO communicating in a technical context via a network NW by using communication technology COT and communication protocols COP, which includes in the course of controlling and/or regulating the cyber-physical-system CPS, CPS' at least one "Programmable Logic Controller <PLC>" PLC. The Programmable Logic Controller PLC is connected within the cyber-physical-system CPS, CPS' via sensors SS and/or actors AT with controllable system processes SPR_{crt} of the system processes SPR and controllable system components SCO_{crt} of the system components SCO.

Such controllable system processes SPR_{crt} are for instance and preferably process instrumentation devices PID and such controllable system components SCO_{crt} are for instance and preferably field devices FD.

The sensors SS and/or the actors AT generate corresponding sensor/actor-signal-information SASI, which is utilized by the Programmable Logic Controller PLC for the "Programmable Logic Controller <PLC>"-control and/or -regulation.

By using this sensor/actor-signal-information SASI through the Programmable Logic Controller PLC the cyber-physical-system CPS, CPS' provides the sensor/actor-signal-information SASI depicting a behavior of the cyber-physical-system CPS, CPS' during operation or commissioning.

With regard to the depicted scenario identifying manipulations within the cyber-physical-system CPS, CPS' and in addition a Digital-Twin-Unit DTU is necessary, which in the course of "Model-based Digital-Twin-Representation" of the cyber-physical-system CPS, CPS' is assignable (**i**) - according to a "use-case I" in the FIGURE 1 - via a "Human-Machine-Interface"-Unit HMI-U and a "Supervisory Control and Data Acquisition <SCADA>"-Unit SCADA-U **or** (**ii**) - according to a "use-case II" in the FIGURE 1 - via a "Supervisory Control and Data Acquisition <SCADA>"-Unit SCADA-U **or** - according to a "use-case III" in the FIGURE 1 - via a "Human-Machine-Interface"-Unit HMI-U to the Programmable Logic Controller PLC.

The Digital-Twin-Unit DTU encompasses following subunits forming the DTU-Unit and operating together in the depicted manner:
- a simulated system processes and system components subunit SPSCₛₘₗ-SU,
- a simulated network subunit NWₛₘₗ-SU and
- an emulated Programmable Logic Controller PLCₑₘₗ.

The Digital-Twin-Unit DTU accordingly designed is operable such that based on a simulation model SMD of the cyber-physical-system CPS, CPS', which is carried out on the simulated system processes and system components subunit SPSCₛₘₗ-SU and the simulated network subunit NWₛₘₗ-SU, and on the emulated Programmable Logic Controller PLCₑₘₗ a digital twin DT is created and executed, which replicates the behavior of the cyber-physical-system (CPS, CPS') and consequently produces replicated sensor/actor-signal-information SASIᵣₚ by simulating the cyber-physical system CPS, CPS'.

In order to identify the manipulations within the cyber-physical-system CPS, CPS' it is required further a surveillance unit SVU, which is connected with the Programmable Logic Controller PLC and the Digital-Twin-Unit DTU to form a functional unit FTU identifying the manipulations within the surveillance arrangement SVA. The surveillance arrangement SVA is supplemented by the "Human Machine Interface"-Unit HMI-U and/or the SCADA-Unit SCADA-U for the purpose and in the case that further information from outside the surveillance arrangement SVA is required in the context of identifying the manipulation of the cyber-physical-system CPS, CPS'. Which information this could be, will be explained further below.

Regarding the surveillance unit SVU there are now the following implementation and design options.

So, the surveillance unit SVU can be implemented within the surveillance arrangement SVA such that the surveillance unit SVU is either assigned to a dedicated cyber-physical-system CPS according to an option "A" depicted in the FIGURE 1 or is embedded in another dedicated cyber-physical system CPS' according to an option "B" depicted in the FIGURE 1.

Further, the surveillance unit SVU can be designed as a hardware solution or as software solution according to which the surveillance unit SVU is a computer-implemented-tool CIT, which is nothing else than a Computer-Program-Product being designed preferably as an APP.

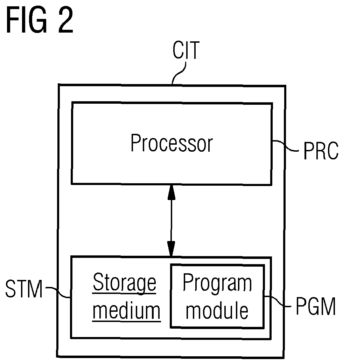

FIGURE 2 shows in a principle diagram of the computer-implemented-tool CIT how the tool could be designed. According to the depiction the computer-implemented-tool CIT includes a non-transitory, processor-readable storage medium STM having processor-readable program-instructions of a program module PGM for identifying manipulations of cyber-physical-systems stored in the non-transitory, processor-readable storage medium STM and a processor PRC connected with the storage medium STM executing the processor-readable program-instructions of the program module PGM to identify manipulations of cyber-physical-systems.

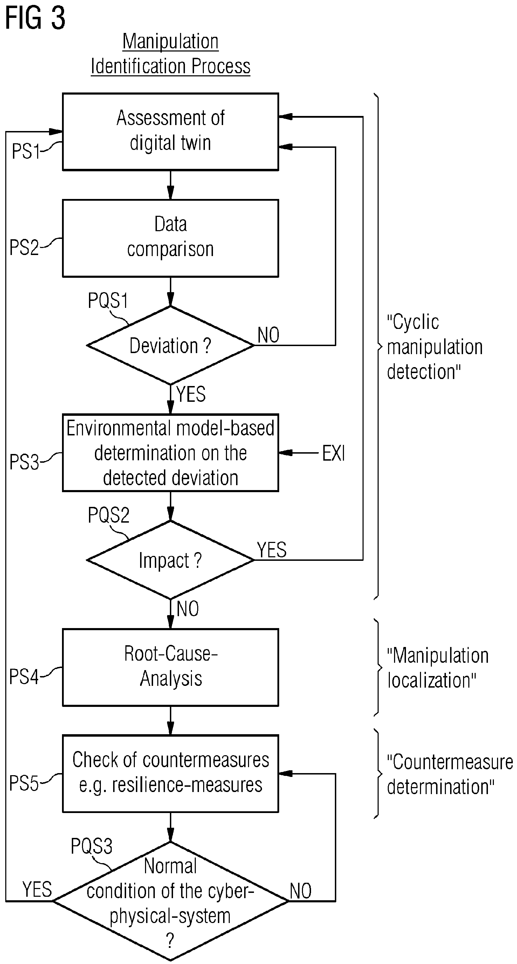

Regardless of how the surveillance unit SVU is implemented or designed for identifying the manipulations it is necessary that the cyber-physical-system CPS, CPS' and the Digital-Twin-Unit DTU are run in parallel. When this is the case the due to the functional unit FTU functionally assigned or embedded surveillance unit SVU is further designed such that a "manipulation identification process" according to FIGURE 3 is carried out.

According to this design the surveillance unit SVU implements and thus includes an environmental model EVM, into which external information EXI provided by an environmental-input-unit EVIPU are inputted. The external information EXI are information from external information sources, which are collected from the environmental-input-unit EVIPU and which include for instance date and time information, location information, environmental conditions such as temperature detected by an external sensor, etc.

According to the FIGURE 3 the "manipulation identification process" starts in a first process state PS1 by assessing the digital twin. By doing so the sensor/actor-signal-information SASI and the replicated sensor/actor-signal-information SASIᵣₚ are inputted, e.g. uploaded, into the surveillance unit SVU, as shown in the FIGURE 1.

According to the FIGURE 1 there are also other information - as it will be described later on, which are in putted or uploaded into the surveillance unit SVU. These information are: A threshold or tolerance value TV and partial derivatives DVₚₜ.

Then in a second process state PS2 a data comparison is carried out by the surveillance unit SVU, before in a first process query state PQS1 it is checked whether a deviation exists. If the answer of this check is "YES" a deviation is detected and thus a manipulation of the cyber-physical-system CPS, CPS' is identified.

However, if the answer of the check is "NO" the process is to be continued by going back to the first process state PS1 and the cited process states are run through again with updated or changed (different) sensor/actor-signal-information SASI and updated or changed (different), replicated sensor/actor-signal-information SASIᵣₚ until the answer of the check is "YES".

Afterwards, when the answer of the check is "YES", in a third process state PS3 an environmental model EVM-based determination on the detected deviation is carried out by the surveillance unit SVU using the implemented environmental model EVM, into which the external information EXI provided by the environmental-input-unit EVIPU is inputted, before in a second process query state PQS2 it is checked whether an impact on the deviation due to the external and environmental conditions of the cyber-physical-system CPS, CPS' and correspondingly based on the external information EXI exists. If the answer of this check is "NO" an impact is determined and thus a manipulation of the cyber-physical-system CPS, CPS' is identified.

However, if the answer of the check is "YES" the process is to be continued by going back to the first process state PS1 and the cited process states are run through again with updated or changed (different) sensor/actor-signal-information SASI and updated or changed (different), replicated sensor/actor-signal-information SASIᵣₚ until the answer of the check is "NO".

This phase (part) of the "manipulation identification process" consequently can be overwritten as "cyclic manipulation detection".

In the course of this "cyclic manipulation detection" carried out by the surveillance unit SVU
(i) a deviation in the behavior of the cyber-physical-system CPS, CPS' is detected cyclically by comparing information by information the sensor/actor-signal-information SASI, received from the Programmable Logic Controller PLC, with the replicated sensor/actor-signal-information SASIᵣₚ, received via the digital twin DT of the Digital-Twin-Unit DTU and impacts on the detected deviation due to the external and environmental conditions of the cyber-physical-system CPS, CPS' and correspondingly based on the external information EXI is determined cyclically,
(ii) a manipulation of the cyber-physical-system CPS, CPS' is identified, if
   - for each detection cycle the sensor/actor-signal-information SASI and the replicated sensor/actor-signal-information SASIᵣₚ are different and consequently the deviation is detected,
   - the detected deviation is not affected by impacts due to the model-based EVM, EXI, EVIPU determining and
   - the detected deviation exceeds a threshold or tolerance value TV, which is preferably a default value.

This means that
- in the first process state PS1, in the second process state PS2 and in the third process state PS3 of the "manipulation identification process" flowchart depicted in the FIGURE 3 the feature (**i**) of the cyclic manipulation detection and
- in the first process query state PQS1 and in the second process query state PQS2 of the flowchart depicted in the FIGURE 3, when it is checked firstly (PQS1) whether a deviation exists, when the answer of this check is "YES", when it is checked secondly (PQS2) whether an impact exists and when the answer of this check is "NO" the feature (**ii**) of the "cyclic manipulation detection" are carried out.

Now, when due to the "cyclic manipulation detection"-phase the manipulation of the cyber-physical-system CPS, CPS' is identified, it is beneficial according to the depicted "manipulation identification process" flowchart that in a further phase (part) of the "manipulation identification process" overwritten as "manipulation localization" a source of the manipulation identified by the aforementioned deviation detection is localized or determined. According to the depicted "manipulation identification process" flowchart in the FIGURE 3 this localization or determination, which is based on a root-cause-analysis, is carried out again by the surveillance unit SVU in a fourth process state PS4.

In the course of this "manipulation localization" the surveillance unit SVU is designed further such that dependencies between the sensor/actor-signal-information SASI are analyzed, wherein it is considered that
- the dependencies between the sensor/actor-signal-information SASI are changed over time according to an operation point the cyber-physical-system CPS, CPS' is currently in,
- the dependencies between the sensor/actor-signal-information SASI are derived inside the network NW, the system processes SPR and the system components SCO by partial derivatives DVₚₜ of the simulation model SMD,
- the dependencies between the sensor/actor-signal-information SASI inside the Programmable Logic Controller PLC are derived either by analyzing manually or tool-supported PLC-codes or by analyzing - as the already mentioned further information from outside the surveillance arrangement SVA - formalized flow-diagrams of the cyber-physical-system CPS, CPS'. These formalized flow-diagrams are made available preferably via the "Human Machine Interface"-Unit HMI-U or the SCADA-Unit SCADA-U being connected each with the Programmable Logic Controller PLC.

Furthermore, with respect to the "manipulation identification process", it is advantageous according to the depicted process identification flowchart that in an additional phase (part) of the "manipulation identification process" overwritten as "countermeasure determination" manipulation-effects on the cyber-physical-system CPS, CPS' are examined. According to the depicted process identification flowchart in the FIGURE 3 this examination, which is based on a check of countermeasures, e.g. resilience measures, is carried out again by the surveillance unit SVU in a fifth process state PS5.

In the course of this "countermeasure determination" the surveillance unit SVU is designed additionally such that it is checked
- whether countermeasures are appropriate to protect the cyber-physical-system CPS, CPS' with regard to the manipulation either identified by the deviation detection in the "manipulation localization"-phase or identified by the deviation detection and determined or localized by the root-cause-analysis in the "manipulation localization"-phase and
- which one thereof,
   come into question, are possible or could be taken by assigning the said manipulation to the digital twin DT, where according to
- a "Fast-Forward"-simulation mechanism it is simulated what happens to the cyber-physical-system CPS, CPS' as result of the assigned manipulation and
- an optimization algorithm applied to the "Fast-Forward"-simulation mechanism or a "What-If"-algorithm applied multiple times to the "Fast-Forward"-simulation mechanism it is evaluated by which countermeasure the manipulated cyber-physical-system CPS, CPS' is retransferred into a safe state.

Then and finally with respect to the "manipulation identification process" depicted in the FIGURE 3 it is checked in a third process query state PQS3 whether a normal condition of the cyber-physical-system CPS, CPS' exists. If the answer of this check is "YES" a normal condition is reached, the "manipulation identification process" is finished and thus a new process can be started by going back to the first process state PS1 and the cited process states are run through again with new sensor/actor-signal-information SASI and new replicated sensor/actor-signal-information SASIᵣₚ.

However, if the answer of the check is "NO" the process is to be continued by going back to the fifth process state PS5 and the corresponding countermeasure check is done until the answer of the check in the third process query state PQS3 is "YES".

### References:

[1] https://securingtomorrow.mcafee.com/other-blogs/mcafee-labs/triton-malware-spearheadslatest-generation-of-attacks-on-industrialsystems
[2] H. Sandberg, S. Amin, and K. H. Johansson, "Cyberphysical security in networked control systems: An introduction to the issue," IEEE Control Systems Magazine, vol. 35, no. 1, pp. 20-23, Feb 2015.
[3] M.S. Chong, H. Sandberg, A.M.H. Teixeira, "A Tutorial to Security and Privacy for Cyber-Physical Systems", 18th European Control Conference (ECC), 2019.
[4] M. Al-Asiri, E.-S.M. El-Alfy, "On Using Physical Based Intrusion Detection in SCADA Systems," in Proceedings of the 11th International Conference on Ambient Systems, Networks and Technologies (ANT), 2020.
[5] Claroty. Company website. https://www.claroty.com.
[6] CyberX. Company website. https://www.cyberx-labs.com.
[7] D. Hadz̊iosmanović, R. Sommer, E. Zambon, and P.H. Hartel, "Through the Eye of the PLC: Semantic Security Monitoring for Industrial Processes," in Proceedings of the 30th Annual Computer Security Applications Conference (ACSAC '14), 2014.
[8] H.R. Ghaeini, D. Antonioli, F. Brasser, A.-R. Sadeghi, and N.O. Tippenhauer. 2018. State-Aware Anomaly Detection for Industrial Control Systems. 33rd ACM/SIGAPP Symposium On Applied Computing (SAC).
[9] M. Luchs, C. Doerr, "Last line of defense: A novel ids approach against advanced threats in industrial control systems," in Lecture Notes in Computer Science (including subseries Lecture Notes in Artificial Intelligence and Lecture Notes in Bioinformatics) 10327 LNCS, 141-160, 2017
[10] D. I. Urbina, J. A. Giraldo, A. A. Cardenas, N. O. Tippenhauer, J. Valente, M. Faisal, J. Ruths, R. Candell, and H. Sandberg, "Limiting the impact of stealthy attacks on industrial control systems," in SIGSAC Conference on Computer and Communications Security, 2016.
[11] M. Eckhart and A. Ekelhart, "A Specification-based State Replication Approach for Digital Twins", in Proceedings of the 2018 Workshop on Cyber-Physical Systems Security and PrivaCy, Toronto Canada, Jan. 2018, pp. 36-47, doi: 10.1145/3264888.3264892.
[12] M. Guglielmi, A. Trombetta and I. Nai Fovino, "Critical State Based Intrusion Detection System For Industrial Communication Protocols," 2011
[13] Y. Liu, P. Ning, and M.K. Reiter, "False data injection attacks against state estimation in electric power grids," in Proceedings of ACM conference on Computer and communications security (CCS), 2009.

## Claims

1. Computer-implemented method for identifying manipulations of cyber-physical-systems, in which
**a**) a cyber-physical-system (CPS, CPS') with an embedded, distributed and complex system structure (SST) including
- system processes (SPR) and system components (SCO) communicating in a technical context via a network (NW) by using communication technology (COT) and communication protocols (COP),
- in the course of "Programmable Logic Controller <PLC>"-control and/or -regulation of the cyber-physical-system (CPS, CPS') at least one Programmable Logic Controller (PLC), which is connected via sensors (SS) and/or actors (AT) with controllable system processes (SPR_{crt}) and controllable system components (SCO_{crt}), in particular process instrumentation devices (PID) respectively field devices (FD), wherein the sensors (SS) and/or the actors (AT) generate corresponding sensor/actor-signal-information (SASI) utilized by the Programmable Logic Controller (PLC) for the "Programmable Logic Controller <PLC>"-control and/or -regulation, provides the sensor/actor-signal-information (SASI) depicting a behavior of the cyber-physical-system (CPS, CPS') during operation or commissioning,
**b**) a Digital-Twin-Unit (DTU), which in the course of "Model-based Digital-Twin-Representation" of the cyber-physical system (CPS, CPS') is assignable via at least one of a "Human-Machine-Interface"-Unit (HMI-U) and a "Supervisory Control and Data Acquisition <SCADA>"-Unit (SCADA-U) to the Programmable Logic Controller (PLC), is operable such that based on a simulation model (SMD) of the cyber-physical-system (CPS, CPS') and on an emulated Programmable Logic Controller (PLCₑₘₗ) a digital twin (DT) is created and executed, which replicates the behavior of the cyber-physical-system (CPS, CPS') and consequently produces replicated sensor/actor-signal-information (SASIᵣₚ) by simulating the cyber-physical-system (CPS, CPS'), **characterized by**:
**c**) when the cyber-physical-system (CPS, CPS') and the Digital-Twin-Unit (DTU) are run in parallel
**c1**) detecting cyclically a deviation in the behavior of the cyber-physical-system (CPS, CPS') by comparing information by information the sensor/actor-signal-information (SASI) with the replicated sensor/actor-signal-information (SASIᵣₚ),
**c2**) an environmental model (EVM)-based determining impacts on the deviation due to external and environmental conditions of the cyber-physical-system (CPS, CPS') and correspondingly based on external information (EXI) inputted into the environmental model (EVM) and provided by an environmental-input-unit (EVIPU),
**c3**) identifying a manipulation of the cyber-physical-system (CPS, CPS') if
- for each detection cycle the sensor/actor-signal-information (SASI) and the replicated sensor/actor-signal-information (SASIᵣₚ) are different and consequently the deviation is detected,
- the detected deviation is not affected by impacts due to the model-based (EVM, EXI, EVIPU) determining and
- the detected deviation exceeds a threshold or tolerance value (TV).

2. Computer-implemented method according to claim 1, **characterized in that**
in the context of identifying system manipulation a source of the manipulation identified by the deviation detection is determined or localized by applying a root-cause-analysis, in which dependencies between the sensor/actor-signal-information (SASI) are analyzed thereby considering that
- the dependencies between the sensor/actor-signal-information (SASI) are changed over time according to an operation point the cyber-physical-system (CPS, CPS') is currently in,
- the dependencies between the sensor/actor-signal-information (SASI) are derived inside the network (NW), the system processes (SPR) and the system components (SCO) by partial derivatives (DVₚₜ) of the simulation model (SMD),
- the dependencies between the sensor/actor-signal-information (SASI) inside the Programmable Logic Controller (PLC) are derived either by analyzing, in particular manually or tool-supported, PLC-codes or by analyzing formalized flow-diagrams of the cyber-physical-system (CPS, CPS'), in particular made available via the "Human Machine Interface"-Unit (HMI-U) or the SCADA-Unit (SCADA-U), which are connected with the Programmable Logic Controller (PLC).

3. Computer-implemented method according to claim 1 or 2, **characterized in that**
in the context of identifying system manipulation manipulation-effects on the cyber-physical-system (CPS, CPS') are examined to check
- whether countermeasures, in particular resilience-measures, are appropriate to protect the cyber-physical-system (CPS, CPS') with regard to the manipulation either identified by the deviation detection or identified by the deviation detection and determined or localized by the root-cause-analysis and
- which one thereof,
come into question, are possible or could be taken by assigning the said manipulation to the digital twin (DT), where according to
- a "Fast-Forward"-simulation mechanism it is simulated what happens to the cyber-physical system (CPS, CPS') as result of the assigned manipulation and
- an optimization algorithm applied to the "Fast-Forward"-simulation mechanism or a "What-If"-algorithm applied multiple times to the "Fast-Forward"-simulation mechanism it is evaluated by which countermeasure the manipulated cyber-physical system (CPS, CPS') is retransferred into a safe state.

4. Computer-implemented method according to one of the claims 1 to 3, **characterized in that**
the threshold or tolerance value (TV) is a default value.

5. Computer-implemented method according to one of the claims 1 to 4, **characterized in that**
the cyber-physical-system (CPS, CPS') is a production or industrial plant.

6. Computer-implemented-tool (CIT), in particular a Computer-Program-Product, e.g. designed as an APP, for carrying out the computer-implemented method according to one of the claims 1 to 5, with
- a non-transitory, processor-readable storage medium (STM) having processor-readable program-instructions of a program module (PGM) for carrying out the computer-implemented method stored in the non-transitory, processor-readable storage medium (STM) and
- a processor (PRC) connected with the storage medium (STM) executing the processor-readable program-instructions of the program module (PGM) to carry out the computer-implemented method according to one of the claims 1 to 5.

7. Surveillance arrangement (SVA) for identifying manipulations of cyber-physical-systems, in which
**a)** a cyber-physical-system (CPS, CPS') with an embedded, distributed and complex system structure (SST) including
- system processes (SPR) and system components (SCO) communicating in a technical context via a network (NW) by using communication technology (COT) and communication protocols (COP),
- in the course of "Programmable Logic Controller <PLC>"-control and/or -regulation of the cyber-physical-system (CPS, CPS') at least one Programmable Logic Controller (PLC), which is connected via sensors (SS) and/or actors (AT) with controllable system processes (SPR_{crt}) and controllable system components (SCO_{crt}), in particular process instrumentation devices (PID) respectively field devices (FD), wherein the sensors (SS) and/or the actors (AT) generate corresponding sensor/actor-signal-information (SASI) utilized by the Programmable Logic Controller (PLC) for the "Programmable Logic Controller <PLC>"-control and/or -regulation,
provides the sensor/actor-signal-information (SASI) depicting a behavior of the cyber-physical-system (CPS, CPS') during operation or commissioning,
**b**) a Digital-Twin-Unit (DTU), which in the course of "Model-based Digital-Twin-Representation" of the cyber-physical-system (CPS, CPS') is assignable via at least one of a "Human-Machine-Interface"-Unit (HMI-U) and a "Supervisory Control and Data Acquisition <SCADA>"-Unit (SCADA-U) to the Programmable Logic Controller (PLC), is operable such that based on a simulation model (SMD) of the cyber-physical-system (CPS, CPS') and on an emulated Programmable Logic Controller (PLCₑₘₗ) a digital twin (DT) is created and executed, which replicates the behavior of the cyber-physical-system (CPS, CPS') and consequently produces replicated sensor/actor-signal-information (SASIᵣₚ) by simulating the cyber-physical system (CPS, CPS'), **characterized by**:
**c**) a surveillance unit (SVU) either assigned to the cyber-physical-system (CPS; Option "A") or embedded in the cyber-physical system (CPS'; Option "B") and thereby connected with the Programmable Logic Controller (PLC) and the Digital-Twin-Unit (DTU) to form a functional unit (FTU) identifying the manipulations, wherein the functional assigned or embedded surveillance unit (SVU), when the cyber-physical-system (CPS, CPS') and the Digital-Twin-Unit (DTU) are run in parallel,
**c1**) detects cyclically a deviation in the behavior of the cyber-physical-system (CPS, CPS') by comparing information by information the sensor/actor-signal-information (SASI) with the replicated sensor/actor-signal-information (SASIᵣₚ),
**c2**) determines on the basis of an environmental model (EVM), being implemented in the surveillance unit (SVU), impacts on the deviation due to external and environmental conditions of the cyber-physical-system (CPS, CPS') and correspondingly based on external information (EXI) inputted into the environmental model (EVM) and provided by an environmental-input-unit (EVIPU),
**c3**) identifies a manipulation of the cyber-physical-system (CPS, CPS') if
- for each detection cycle the sensor/actor-signal-information (SASI) and the replicated sensor/actor-signal-information (SASIᵣₚ) are different and consequently the deviation is detected,
- the detected deviation is not affected by impacts due to the model-based (EVM, EXI, EVIPU) determining and
- the detected deviation exceeds a threshold or tolerance value (TV).

8. Surveillance arrangement (SVA)according to claim 7, **characterized in that**
the surveillance unit (SVU) is designed such that in the context of identifying system manipulation a source of the manipulation identified by the deviation detection is determined or localized by applying a root-cause-analysis, in which dependencies between the sensor/actor-signal-information (SASI) are analyzed thereby considering that
- the dependencies between the sensor/actor-signal-information (SASI) are changed over time according to an operation point the cyber-physical-system (CPS, CPS') is currently in,
- the dependencies between the sensor/actor-signal-information (SASI) are derived inside the network (NW), the system processes (SPR) and the system components (SCO) by partial derivatives (DVₚₜ) of the simulation model (SMD),
- the dependencies between the sensor/actor-signal-information (SASI) inside the Programmable Logic Controller (PLC) are derived either by analyzing, in particular manually or tool-supported, PLC-codes or by analyzing formalized flow-diagrams of the cyber-physical-system (CPS, CPS'), in particular made available via the "Human Machine Interface"-Unit (HMI-U) or the SCADA-Unit (SCADA-U), which are connected with the Programmable Logic Controller (PLC).

9. Surveillance arrangement (SVA) according to claim 7 or 8, **characterized in that**
the surveillance unit (SVU) is designed such that in the context of identifying system manipulation manipulation-effects on the cyber-physical-system (CPS, CPS') are examined to check
- whether countermeasures, in particular resilience-measures, are appropriate to protect the cyber-physical-system (CPS, CPS') with regard to the manipulation either identified by the deviation detection or identified by the deviation detection and determined or localized by the root-cause-analysis and
- which one thereof,
come into question, are possible or could be taken by assigning the said manipulation to the digital twin (DT), where according to
- a "Fast-Forward"-simulation mechanism it is simulated what happens to the cyber-physical-system (CPS, CPS') as result of the assigned manipulation and
- an optimization algorithm applied to the "Fast-Forward"-simulation mechanism or a "What-If"-algorithm applied multiple times to the "Fast-Forward"-simulation mechanism it is evaluated by which countermeasure the manipulated cyber-physical-system (CPS, CPS') is retransferred into a safe state.

10. Surveillance arrangement (SVA) according to one of the claims 7 to 9, **characterized in that**
the threshold or tolerance value (TV) is a default value.

11. Surveillance arrangement (SVA) according to one of the claims 7 to 10, **characterized in that**
the surveillance unit (SVU) is designed as a computer-implemented-tool (CIT), in particular a Computer-Program-Product, e.g. designed as an APP, with
- a non-transitory, processor-readable storage medium (STM) having processor-readable program-instructions of a program module (PGM) for identifying manipulations of cyber-physical-systems stored in the non-transitory, processor-readable storage medium (STM) and
- a processor (PRC) connected with the storage medium (STM) executing the processor-readable program-instructions of the program module (PGM) to identify manipulations of cyber-physical-systems.

12. Surveillance arrangement (SVA) according to one of the claims 7 to 11, **characterized in that** the cyber-physical-system (CPS, CPS') is a production or industrial plant.

13. Cyber-physical system (CPS'),
**characterized by**
a surveillance arrangement (SVA) according to one of the claims 7 to 11 and embedded in the cyber-physical system (CPS'; Option "B") to carry out the computer-implemented method according to one of the claims 1 to 5.
